# EUROPÄISCHE PATENTANMELDUNG

(11) **EP 4 749 145 A1**
(43) Veröffentlichungstag der Anmeldung: **27.05.2026**
(21) Anmeldenummer: 25217295.2
(22) Anmeldetag: 20.11.2025
(51) Int. Cl.: F15B 19/00, F16K 37/00, F16K 31/163

(54) **VERFAHREN ZUM BETRIEB EINER PROZESSVENTIL-BAUEINHEIT UND PROZESSVENTIL-BAUEINHEIT**

(30) Priorität: 22.11.2024 DE 102024134420
(71) Anmelder: Festo SE & Co. KG, 73734 Esslingen (DE)
(72) Erfinder: Steltner, Dr. Holger, 73730 Esslingen am Neckar (DE)
(74) Vertreter: Patentanwälte Magenbauer & Kollegen Partnerschaft mbB

(57) **Zusammenfassung**

Die Erfindung betrifft ein Verfahren zum Betrieb einer Prozessventil-Baueinheit (20), die eine Prozessarmatur (1), einen pneumatischen Ventilantrieb (3) zum Antrieb der Prozessarmatur (1) und eine Steuereinrichtung (4) zur pneumatischen Betätigung des Ventilantriebs (3) aufweist, umfassend die folgenden durch die Steuereinrichtung (4) durchgeführten Schritte: pneumatisches Betätigen des Ventilantriebs (3) mit einem Arbeitsdruck, um mit einem Ventilglied (2) der Prozessarmatur (1) einen Teilhubtest durchzuführen, Erfassen von Druckwerten (dw1, dw2, ..., dw8) des Arbeitsdrucks und Positionswerten (pw1, pw2, ..., pw8) des Ventilglieds (2) während des Teilhubtests, Detektieren von mehreren aufeinanderfolgenden Teilhubtest-Ereignissen, die während des Teilhubtests auftreten, für jedes detektierte Teilhubtest-Ereignis, Ermitteln eines jeweiligen Datenpunkts (dp1, dp2, ..., dp8), der wenigstens einen Druckwert und einen Positionswert umfasst, und Speichern der ermittelten Datenpunkte als Datensatz.

## Beschreibung

Die Erfindung betrifft ein Verfahren zum Betrieb einer Prozessventil-Baueinheit, die eine Prozessarmatur, einen pneumatischen Ventilantrieb zum Antrieb der Prozessarmatur und eine Steuereinrichtung zur pneumatischen Betätigung des Ventilantriebs aufweist, umfassend die folgenden durch die Steuereinrichtung durchgeführten Schritte: pneumatisches Betätigen des Ventilantriebs mit einem Arbeitsdruck, um mit einem Ventilglied der Prozessarmatur einen Teilhubtest durchzuführen und Erfassen von Druckwerten des Arbeitsdrucks und Positionswerten des Ventilglieds während des Teilhubtests.

Eine Aufgabe der Erfindung besteht darin, bei dem Teilhubtest in effizienter Weise Daten über die Prozessventil-Baueinheit zu sammeln.

Die Aufgabe wird gelöst durch ein Verfahren gemäß Anspruch 1. Das Verfahren umfasst die weiteren Schritte: Detektieren von mehreren aufeinanderfolgenden Teilhubtest-Ereignissen, die während des Teilhubtests auftreten, für jedes detektierte Teilhubtest-Ereignis, Ermitteln eines jeweiligen Datenpunkts, der wenigstens einen Druckwert (aus den erfassten Druckwerten) des Arbeitsdrucks und einen Positionswert (aus den erfassten Positionswerten) des Ventilglieds umfasst, und Speichern der ermittelten Datenpunkte als Datensatz.

Ein Datenpunkt, der für ein detektiertes Teilhubtest-Ereignis ermittelt wird, soll auch als diesem Teilhubtest-Ereignis zugeordneter Datenpunkt bezeichnet werden. Ein Datenpunkt, der für ein detektiertes Teilhubtest-Ereignis ermittelt wird, ist insbesondere derjenige Datenpunkt - also derjenige Druckwert des Arbeitsdrucks und derjenige Positionswert des Ventilglieds - der zu dem Zeitpunkt erfasst wird, zu dem das Teilhubtest-Ereignis auftritt und/oder detektiert wird.

Erfindungsgemäß werden also die als Datensatz abzuspeichernden Datenpunkte auf Basis der Teilhubtest-Ereignisse bestimmt und damit aus den insgesamt erfassten Datenpunkten (insbesondere den insgesamt erfassten Druckwerten und Positionswerten) selektiert bzw. extrahiert. Insbesondere werden nur diejenigen Datenpunkte als Datensatz abgespeichert, die den detektierten Teilhubtest-Ereignissen zugeordnet sind. Dadurch kann die Menge der abzuspeichernden Datenpunkte reduziert werden, so dass weniger Speicherplatz benötigt wird. Der Datensatz wird beispielsweise als eigene Datei gespeichert. Optional kann zu jedem Datenpunkt eine Information über den Zeitpunkt seiner Erfassung mit im Datensatz gespeichert werden.

Gemäß einem konventionellen Ansatz werden bei einem Teilhubtest der Arbeitsdruck und die Position des Ventilglieds kontinuierlich erfasst und die resultierende Arbeitsdruck-Kurve und Positions-Kurve abgespeichert. Demgegenüber wird bei dem erfinderischen Ansatz die abzuspeichernde Information gewissermaßen komprimiert oder verdichtet, indem Datenpunkte in Abhängigkeit davon, ob sie einem Teilhubtest-Ereignis zugeordnet sind, abgespeichert werden. Beispielsweise werden Datenpunkte (insbesondere Druckwerte und Positionswerte), die zwischen zwei Teilhubtest-Ereignissen erfasst werden und/oder selbst keinem Teilhubtest-Ereignis zugeordnet sind, nicht abgespeichert, insbesondere nicht in dem Datensatz.

Vorteilhafte Weiterbildungen sind in den Unteransprüchen definiert.

Die Erfindung betrifft ferner eine Prozessventil-Baueinheit, die eine Prozessarmatur, einen pneumatischen Ventilantrieb zum Antrieb der Prozessarmatur und eine Steuereinrichtung zur pneumatischen Betätigung des Ventilantriebs aufweist, wobei die Prozessventil-Baueinheit ausgebildet ist, das vorgenannte Verfahren durchzuführen.

Weitere exemplarische Details sowie beispielhafte Ausführungsformen werden nachstehend unter Bezugnahme auf die Figuren erläutert. Dabei zeigt
- Figur 1: eine schematische Darstellung eines Systems mit einer Prozessventil-Baueinheit,
- Figur 2: ein Schaubild mit einem Positionsverlauf, einem Druckverlauf und einem Steuersignalverlauf, und
- Figur 3: eine Druck-Positions-Kurve.

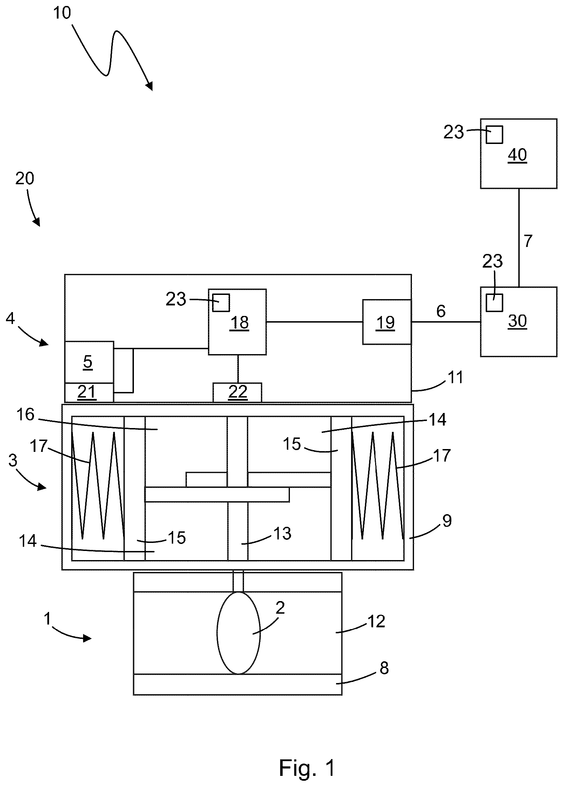

Die Figur 1 zeigt ein System 10, das eine Prozessventil-Baueinheit 20 und optional eine übergeordnete Steuerung 30 und/oder einen Cloud-Server 40 umfasst. Die Prozessventil-Baueinheit 20 ist exemplarisch über eine Kommunikationsleitung 6, insbesondere einen Feldbus, mit der übergeordneten Steuerung 30 verbunden. Die übergeordnete Steuerung 30 ist exemplarisch über ein Weitverkehrsnetz 7, beispielsweise das Internet, mit dem Cloud-Server 40 verbunden.

Gemäß einer möglichen Ausgestaltung kann die Prozessventil-Baueinheit 20 über ein Gateway, insbesondere ein IoT-Gateway, und/oder direkt mit dem Cloud-Server 40 verbunden sein. Optional kann das System 10 ein Edge-Device umfassen.

Die Prozessventil-Baueinheit 20 dient für den Einsatz in der Prozessautomatisierung. Vorzugsweise dient die Prozessventil-Baueinheit 20 dazu, einen Fluss eines Prozessfluids zu beeinflussen. Beispielsweise dient die Prozessventil-Baueinheit 20 als Notabsperrventil. Das System 10 ist eine exemplarische Anwendungsumgebung der Prozessventil-Baueinheit 20. Die Prozessventil-Baueinheit 20 kann auch für sich genommen - also insbesondere ohne die übergeordnete Steuerung 30 und/oder den Cloud-Server 40 - bereitgestellt werden.

Die Prozessventil-Baueinheit 20 umfasst eine Steuereinrichtung 4, die beispielsweise als Stellungsregler ausgeführt ist. Die Prozessventil-Baueinheit 20 verfügt ferner über einen pneumatischen Ventilantrieb 3 und eine von dem pneumatischen Ventilantrieb 3 angetriebene Prozessarmatur 1 mit einem Ventilglied 2. Die Steuereinrichtung 4 dient zur pneumatischen Betätigung des Ventilantriebs 3. Exemplarisch verfügt die Steuereinrichtung 4 über eine pneumatische Ventileinrichtung 5 zur pneumatischen Betätigung des pneumatischen Ventilantriebs 3.

Beispielsweise verfügt die Prozessarmatur 1 über ein Prozessarmatur-Gehäuse 8, der Ventilantrieb 3 über ein Ventilantrieb-Gehäuse 9 und die Steuereinrichtung 4 über ein Steuereinrichtung-Gehäuse 11. Das Ventilantrieb-Gehäuse 9 ist an dem Prozessarmatur-Gehäuse 8 befestigt und das Steuereinrichtung-Gehäuse 11 ist an dem Ventilantrieb-Gehäuse 9 befestigt. Exemplarisch ist das Ventilantrieb-Gehäuse 9 mit seiner Unterseite an der Oberseite des Prozessarmatur-Gehäuses 8 befestigt und das Steuereinrichtung-Gehäuse 11 ist mit seiner Unterseite an der Oberseite des Ventilantrieb-Gehäuses 9 befestigt.

Das Prozessarmatur-Gehäuse 8 ist exemplarisch rohrförmig ausgeführt und definiert einen Prozessfluidkanal 12, der das Prozessfluid führt. Im Prozessfluidkanal 12 ist das Ventilglied 2 angeordnet, um den Fluss des Prozessfluids zu steuern, insbesondere wahlweise zu sperren oder freizugeben oder um einen vorbestimmten Durchfluss-Querschnitt für das Prozessfluid einzustellen.

Der Ventilantrieb 3 verfügt über ein Antriebselement 13, das mit dem Ventilglied 2 gekoppelt ist, so dass über eine Antriebsbewegung, insbesondere eine Antriebs-Drehbewegung, des Antriebselements 13 die Position des Ventilglieds 2 veränderbar ist. Der Ventilantrieb 3 verfügt ferner über eine Kolbenanordnung 15, über die das Antriebselement 13 in die Antriebs-Bewegung versetzt werden kann. Das Ventilglied 2, das Antriebselement 13 und die Kolbenanordnung 15 sollen zusammen als Stellanordnung bezeichnet werden. Bei einer alternativen Ausgestaltung kann die Antriebsbewegung eine lineare Bewegung sein.

Der Ventilantrieb 3 verfügt über wenigstens eine Druckkammeranordnung 14, die von der Ventileinrichtung 5 pneumatisch betätigbar ist, um das Antriebselement 13 in die Antriebsbewegung zu versetzen. Die pneumatische Betätigung erfolgt durch Zuführen und/oder Ablassen von Druckluft in/aus der Druckkammeranordnung 14. Durch die pneumatische Betätigung wird in der Druckkammeranordnung 14 ein Druck eingestellt, der auch als Arbeitsdruck bezeichnet werden soll. Bevorzugt umfasst die Ventileinrichtung 5 ein oder mehrere Ventile, insbesondere Pneumatikventile, mittels derer die Betätigung des Ventilantriebs 3 erfolgt. Exemplarisch umfasst die Druckkammeranordnung 14 eine erste Druckkammer 16, der über die Ventileinrichtung 5 Druckluft zugeführt und abgeführt werden kann.

Der Ventilantrieb 3 ist bevorzugt einfachwirkend ausgeführt, so dass die Druckkammeranordnung 14 zweckmäßigerweise nur eine Druckkammer - die erste Druckkammer 16 - aufweist. Durch den in der ersten Druckkammer 16 herrschenden Druck - der auch als Arbeitsdruck bezeichnet werden soll - wird eine Antriebskraft bereitgestellt, die (über die Kolbenanordnung 15 und das Antriebselement 13) das Ventilglied 2 in Richtung hin zu einer ersten Endlage des Ventilglieds 2 drängt, insbesondere eine Endlage, in der das Ventilglied 2 den Prozessfluidkanal 12 freigibt. Der Ventilantrieb 3 verfügt zweckmäßigerweise über ein Federelement 17, das eine Rückstellkraft bereitstellt, die (über die Kolbenanordnung 15 und das Antriebselement 13) das Ventilglied 2 in Richtung weg von der ersten Endlage drängt. Zweckmäßigerweise drängt die Rückstellkraft das Antriebselement 13 in eine zweite Endlage, in der das Ventilglied 2 den Prozessfluidkanal 12 sperrt.

Gemäß einer nicht gezeigten alternativen Ausgestaltung verfügt der Ventilantrieb ferner über eine zweite Druckkammer und zweckmäßigerweise nicht über das Federelement 17. Der Ventilantrieb ist exemplarisch doppeltwirkend ausgeführt. Bei der doppeltwirkenden Ausführung ist der Arbeitsdruck beispielsweise der Differenzdruck zwischen den beiden Druckkammern.

Der Ventilantrieb 3 ist als Kolbenantrieb, exemplarisch als Zahnstangen-Ritzel-Anrieb, ausgeführt. Die Kolbenanordnung 15 verfügt über wenigstens eine Zahnstange, die mit einem Ritzel des Antriebselements 13 in Eingriff steht. Alternativ kann der Ventilantrieb 3 auch anders ausgeführt sein, beispielsweise als Membranantrieb.

Die Steuereinrichtung 4 umfasst eine Steuereinheit 18, die insbesondere als Mikrocontroller ausgeführt ist, und vorzugsweise eine Kommunikationseinheit 19, die insbesondere zur Kommunikation mit der übergeordneten Steuerung 30 und/oder mit dem Cloud-Server 40 dient.

Die Steuereinrichtung 4 umfasst die Ventileinrichtung 5 und ist ausgebildet, mittels der Ventileinrichtung 5 Druckluft in die Druckkammeranordnung 14 einzulassen und/oder mittels der Ventileinrichtung 5 Druckluft aus der Druckkammeranordnung 14 abzulassen, um den Druck in der Druckkammeranordnung 14, insbesondere der ersten Druckkammer 16, einzustellen.

Die Steuereinrichtung 4 umfasst zweckmäßigerweise ferner eine Drucksensoreinrichtung 21 und ist ausgebildet, mittels der Drucksensoreinrichtung 21 den Druck der ersten Druckkammer 16, insbesondere den Arbeitsdruck zu erfassen. Bei einer doppeltwirkenden Ausführung des Ventilantriebs ist die Drucksensoreinrichtung 21 zweckmäßigerweise ferner ausgebildet, einen in der zweiten Druckkammer des Ventilantriebs herrschenden Druck zu erfassen und/oder den Differenzdruck zwischen den beiden Druckkammern zu erfassen.

Die Steuereinrichtung 4 umfasst zweckmäßigerweise ferner eine Positionssensoreinrichtung 22 und ist ausgebildet, mittels der Positionssensoreinrichtung 22 eine Position, insbesondere eine Drehstellung, des Ventilglieds 2 zu erfassen, beispielsweise durch eine Erfassung der Position des Antriebselements 13, aus der auf die Position des Ventilglieds 2 geschlossen werden kann.

Zweckmäßigerweise gibt die übergeordnete Steuerung 30 einen Steuerbefehl an die Steuereinrichtung 4 aus, insbesondere über die Kommunikationsleitung 6. Der Steuerbefehl gibt beispielsweise eine Soll-Position für das Ventilglied 2 vor. Die Steuereinrichtung 4 ist vorzugsweise ausgebildet, auf Basis des Steuerbefehls eine Stellungsregelung des Ventilglieds 2 durchzuführen. Hierzu vergleicht die Steuereinrichtung 4 die über die Positionssensoreinrichtung 22 erfasste Position mit der durch den Steuerbefehl vorgegebenen Soll-Position und stellt auf Basis des Vergleichs den Arbeitsdruck mittels der Ventileinrichtung 5 so ein, dass sich die Position hin zur Soll-Position verändert.

Bevorzugt umfasst das System 10 eine Diagnoseeinrichtung 23, die beispielsweise als Softwarekomponente ausgeführt ist. Die Diagnoseeinrichtung 23 kann beispielsweise auf der Steuereinheit 18, der übergeordneten Steuerung 30, dem Cloud-Server 40 und/oder dem Edge-Device implementiert sein.

Im Folgenden soll näher auf eine Durchführung eines Teilhubtests eingegangen werden.

Die Steuereinrichtung 4 führt eine pneumatische Betätigung des Ventilantriebs 3 mit dem Arbeitsdruck durch, um mit dem Ventilglied 2 der Prozessarmatur 1 den Teilhubtest durchzuführen. Beispielsweise wird das Ventilglied 2 bei dem Teilhubtest ausgehend von einer Ausgangsposition, insbesondere der ersten Endlage oder der zweiten Endlage, hin zu einer Zielposition bewegt, und dann ausgehend von der Zielposition zurück zu der Ausgangsposition bewegt. Beim Teilhubtest bewegt sich das Ventilglied 2 nur über einen Teil seines insgesamt verfügbaren Hubs. Der insgesamt verfügbare Hub ist beispielsweise die Positionsänderung des Ventilglieds 2 von der ersten Endlage zu der zweiten Endlage. Beispielsweise wird das Ventilglied 2 beim Teilhubtest um mehr als 1% und/oder weniger als 10% des insgesamt verfügbaren Hubs bewegt. Der Teilhubtest kann auch als Partial-Stroke-Test bezeichnet werden. Der Teilhubtest erfolgt insbesondere im laufenden Betrieb, beispielsweise in einem Zustand, in dem die Prozessventil-Baueinheit 20 in einer Prozesstechnik-Anlage eingesetzt ist und ein Prozessfluid steuert. Der Teilhubtest wird vorzugsweise wiederholt durchgeführt, insbesondere periodisch.

Die Steuereinrichtung 4 erfasst während des Teilhubtests Druckwerte des Arbeitsdrucks (insbesondere mittels der Drucksensoreinrichtung 21) und Positionswerte des Ventilglieds 2 (insbesondere mittels der Positionssensoreinrichtung 22).

Die Steuereinrichtung 4 detektiert mehrere aufeinanderfolgende Teilhubtest-Ereignisse, die während des Teilhubtests auftreten. Bei den Teilhubtest-Ereignissen handelt es sich beispielsweise um bestimmte Betriebszustände der Prozessventil-Baueinheit 20, die diese bei einer normalen Durchführung des Teilhubtests nacheinander annimmt. Die Teilhubtest-Ereignisse sind insbesondere keine Fehlerereignisse.

Die Steuereinrichtung 4 ermittelt für jedes detektierte Teilhubtest-Ereignis einen jeweiligen Datenpunkt, der wenigstens einen Druckwert des Arbeitsdrucks und einen Positionswert des Ventilglieds 2 umfasst. Zweckmäßigerweise umfasst jeder Datenpunkt ferner einen jeweiligen Zeitwert. Der Zeitwert des Datenpunkts zeigt denjenigen Zeitpunkt an, zu dem das jeweilige detektierte Teilhubtest-Ereignis aufgetreten ist. Der Druckwert des Datenpunkts ist derjenige Druckwert, der zum Zeitpunkt des Auftretens des zugeordneten Teilhubtest-Ereignisses erfasst wurde. Der Positionswert des Datenpunkts ist derjenige Positionswert, der zum Zeitpunkt des Auftretens des zugeordneten Teilhubtest-Ereignisses erfasst wurde. Die Steuereinrichtung 4 speichert die ermittelten Datenpunkte als Datensatz, insbesondere in einen Speicher, beispielsweise einen nicht-flüchtigen Speicher, der Steuereinrichtung 4.

Beispielsweise dauert der Teilhubtest insgesamt zwischen 20 Sekunden und 40 Sekunden. Die während des Teilhubtests erfassten Druckwerte und Positionswerte weisen exemplarisch zusammen eine Datengröße von mehr als einem Kilobyte, insbesondere mehr als 10 Kilobyte auf. Der abgespeicherte Datensatz hat vorzugsweise eine Datengröße von weniger als 1 Kilobyte, insbesondere weniger als 100 Byte oder weniger als 50 Byte. Dadurch, dass die Datenpunkte, die in dem Datensatz abgespeichert werden, auf Basis der detektierten Teilhubtest-Ereignisse bestimmt bzw. selektiert werden, kann also die Datengröße der abzuspeichernden Daten signifikant reduziert werden.

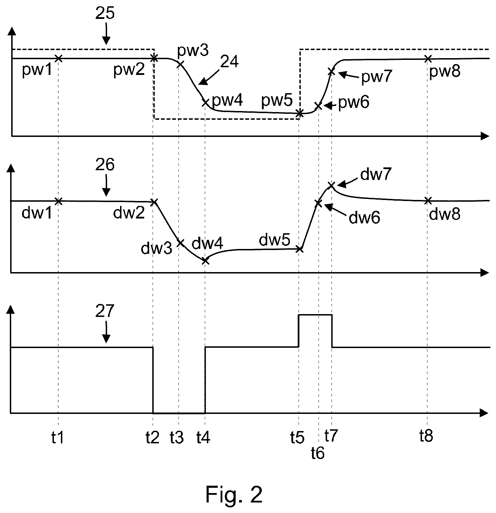

Unter Bezugnahme auf die Figur 2 sollen im Folgenden exemplarische Teilhubtest-Ereignisse diskutiert werden.

Die Figur 2 zeigt einen mit der Positionssensoreinrichtung 22 gemessenen Positionsverlauf 24 des Ventilglieds 2, einen Soll-Positions-Verlauf 25 für das Ventilglied 2, einen mit der Drucksensoreinrichtung 21 gemessenen Druckverlauf 26 des Arbeitsdrucks und einen Steuersignalverlauf 27 eines Steuersignals, mit dem die Steuereinrichtung 4 die Ventileinrichtung 5 ansteuert. Die gezeigten Verläufe sind zeitliche Verläufe. Auf der horizontalen Achse ist dementsprechend jeweils die Zeit aufgetragen.

Der Soll-Positions-Verlauf 25 gibt eine Soll-Position für das Ventilglied 2 vor. Der Soll-Positions-Verlauf 25 wird zweckmäßigerweise von der Steuereinrichtung 4 selbst vorgegeben, oder von extern der Steuereinrichtung 4 vorgegeben. Im Rahmen des Teilhubtests gibt der Soll-Positions-Verlauf 25 zunächst eine erste Soll-Position vor, beispielsweise die erste Endlage oder die zweite Endlage, gibt danach eine zweite Soll-Position vor, und gibt danach wieder die erste Soll-Position vor. Die Steuereinrichtung 4 führt während des Teilhubtests zweckmäßigerweise eine Positionsregelung des Ventilglieds 2 auf Basis des Soll-Positions-Verlaufs 25 durch.

Der Teilhubtest umfasst eine erste Teilhubtest-Phase und eine zweite Teilhubtest-Phase. In der ersten Teilhubtest-Phase bewegt sich das Ventilglied 2 ausgehend von der Ausgangsposition hin zu der Zielposition. In der zweiten Teilhubtest-Phase bewegt sich das Ventilglied 2 ausgehend von der Zielposition hin zu der Ausgangsposition.

Teilhubtest-Ereignisse, die in der ersten Teilhubtest-Phase auftreten, sollen als erste Teilhubtest-Ereignisse bezeichnet werden. Teilhubtest-Ereignisse, die in der zweiten Teilhubtest-Phase auftreten, sollen als zweite Teilhubtest-Ereignisse bezeichnet werden.

Die ersten Teilhubtest-Ereignisse umfassen einen Beginn des Teilhubtests, einen Beginn einer ersten pneumatischen Betätigung des Ventilantriebs 3, eine erste Positionsänderung des Ventilglieds 2 um einen Mindestbetrag, und/oder ein Erreichen, mit dem Ventilglied 2, einer ersten Position nah genug an der Zielposition, so dass die erste pneumatische Betätigung beendet wird.

Das Teilhubtest-Ereignis "Beginn des Teilhubtests" tritt zu einem Zeitpunkt t1 auf. Zweckmäßigerweise detektiert die Steuereinrichtung 4 dieses Teilhubtest-Ereignis auf Basis eines (insbesondere externen oder internen) Start-Signals, mit dem der Teilhubtest ausgelöst wird. Die Steuereinrichtung 4 ermittelt für dieses Teilhubtest-Ereignis einen ersten Datenpunkt dp1, der den zu dem Zeitpunkt t1 vorliegenden Druckwert dw1 und Positionswert pw1 umfasst, und optional einen den Zeitpunkt t1 anzeigenden Zeitwert.

Das Teilhubtest-Ereignis "Beginn einer ersten pneumatischen Betätigung" tritt zu einem Zeitpunkt t2 auf. Zweckmäßigerweise detektiert die Steuereinrichtung 4 dieses Teilhubtest-Ereignis auf Basis eines Ablaufs einer ersten Wartezeit, insbesondere ab dem Zeitpunkt t1, oder auf Basis einer Änderung im Soll-Positions-Verlauf und/oder im Steuersignalverlauf 27. Exemplarisch erfolgt die erste pneumatische Betätigung dadurch, dass die Steuereinrichtung 4 Druckluft aus der ersten Druckkammer 16 ablässt. Die Steuereinrichtung 4 ermittelt für dieses Teilhubtest-Ereignis einen zweiten Datenpunkt dp2, der den zu dem Zeitpunkt t2 vorliegenden Druckwert dw2 und Positionswert pw2 umfasst, und optional einen den Zeitpunkt t2 anzeigenden Zeitwert.

Das Teilhubtest-Ereignis "eine erste Positionsänderung des Ventilglieds 2 um einen Mindestbetrag" tritt zu einem Zeitpunkt t3 auf. Zweckmäßigerweise detektiert die Steuereinrichtung 4 dieses Teilhubtest-Ereignis auf Basis eines Vergleichs eines erfassten Positionswerts oder einer erfassten Positionsänderung des Ventilglieds 2 mit einem vorbestimmten Schwellenwert. Beispielsweise ist der Mindestbetrag ein vorbestimmter Teil des Hubs des Ventilglieds 2, beispielsweise 1%. Die Steuereinrichtung 4 ermittelt für dieses Teilhubtest-Ereignis einen dritten Datenpunkt dp3, der den zu dem Zeitpunkt t3 vorliegenden Druckwert dw3 und Positionswert pw3 umfasst, und optional einen den Zeitpunkt t3 anzeigenden Zeitwert.

Das Teilhubtest-Ereignis "Erreichen, mit dem Ventilglied 2, einer ersten Position" tritt zu einem Zeitpunkt t4 auf. Zweckmäßigerweise detektiert die Steuereinrichtung 4 dieses Teilhubtest-Ereignis in Ansprechen darauf, dass ein erfasster Positionswert des Ventilglieds 2 der ersten Position entspricht und/oder in Ansprechen darauf, dass die erste pneumatische Betätigung beendet wird; beispielsweise erfolgt die Detektion anhand einer Änderung im Steuersignalverlauf 27. Die Steuereinrichtung 4 ermittelt für dieses Teilhubtest-Ereignis einen vierten Datenpunkt dp4, der den zu dem Zeitpunkt t4 vorliegenden Druckwert dw4 und Positionswert pw4 umfasst, und optional einen den Zeitpunkt t4 anzeigenden Zeitwert.

Die zweiten Teilhub-Ereignisse umfassen einen Beginn einer zweiten pneumatischen Betätigung des Ventilantriebs 3, eine zweite Positionsänderung des Ventilglieds 2 um einen Mindestbetrag, ein Erreichen, mit dem Ventilglied 2, einer zweiten Position nah genug an der Ausgangsposition, so dass die zweite pneumatische Betätigung beendet wird, und ein Ende einer dritten Wartezeit.

Das Teilhubtest-Ereignis "Beginn einer zweiten pneumatischen Betätigung" tritt zu einem Zeitpunkt t5 auf. Zweckmäßigerweise detektiert die Steuereinrichtung 4 dieses Teilhubtest-Ereignis auf Basis eines Ablaufs einer zweiten Wartezeit, insbesondere ab dem Zeitpunkt t4, oder auf Basis einer Änderung im Soll-Positions-Verlauf und/oder im Steuersignalverlauf 27. Exemplarisch erfolgt die zweite pneumatische Betätigung dadurch, dass die Steuereinrichtung 4 Druckluft in die erste Druckkammer 16 einlässt. Die Steuereinrichtung 4 ermittelt für dieses Teilhubtest-Ereignis einen fünften Datenpunkt dp5, der den zu dem Zeitpunkt t5 vorliegenden Druckwert dw5 und Positionswert pw5 umfasst, und optional einen den Zeitpunkt t5 anzeigenden Zeitwert.

Das Teilhubtest-Ereignis "eine zweite Positionsänderung des Ventilglieds 2 um einen Mindestbetrag" tritt zu einem Zeitpunkt t6 auf. Zweckmäßigerweise detektiert die Steuereinrichtung 4 dieses Teilhubtest-Ereignis auf Basis eines Vergleichs eines erfassten Positionswerts oder einer erfassten Positionsänderung des Ventilglieds 2 mit einem vorbestimmten Schwellenwert. Beispielsweise ist der Mindestbetrag ein vorbestimmter Teil des Hubs des Ventilglieds 2, beispielsweise 1%. Die Steuereinrichtung 4 ermittelt für dieses Teilhubtest-Ereignis einen sechsten Datenpunkt dp6, der den zu dem Zeitpunkt t6 vorliegenden Druckwert dw6 und Positionswert pw6 umfasst, und optional einen den Zeitpunkt t6 anzeigenden Zeitwert.

Das Teilhubtest-Ereignis "Erreichen, mit dem Ventilglied 2, einer zweiten Position" tritt zu einem Zeitpunkt t7 auf. Zweckmäßigerweise detektiert die Steuereinrichtung 4 dieses Teilhubtest-Ereignis in Ansprechen darauf, dass ein erfasster Positionswert des Ventilglieds 2 der zweiten Position entspricht und/oder in Ansprechen darauf, dass die zweite pneumatische Betätigung beendet wird; beispielsweise erfolgt die Detektion anhand einer Änderung im Steuersignalverlauf 27. Die Steuereinrichtung 4 ermittelt für dieses Teilhubtest-Ereignis einen siebten Datenpunkt dp7, der den zu dem Zeitpunkt t7 vorliegenden Druckwert dw7 und Positionswert pw7 umfasst, und optional einen den Zeitpunkt t7 anzeigenden Zeitwert.

Das Teilhubtest-Ereignis "Ende einer Wartezeit" tritt zu einem Zeitpunkt t8 auf. Zweckmäßigerweise detektiert die Steuereinrichtung 4 dieses Teilhubtest-Ereignis auf Basis eines Ablaufs einer dritten Wartezeit, insbesondere ab dem Zeitpunkt t7. Die Steuereinrichtung 4 ermittelt für dieses Teilhubtest-Ereignis einen achten Datenpunkt dp8, der den zu dem Zeitpunkt t8 vorliegenden Druckwert dw8 und Positionswert pw8 umfasst, und optional einen den Zeitpunkt t8 anzeigenden Zeitwert.

Optional ermittelt die Steuereinrichtung 4 weniger oder mehr als die vorgenannten acht Datenpunkte, und speichert dementsprechend weniger oder mehr als die vorgenannten acht Datenpunkte in den Datensatz. Optional kann z.B. der erste Datenpunkt dp1 (und/oder einer oder mehrere andere Datenpunkte) weggelassen werden. In diesem Fall ist die vorstehende und nachfolgende Erläuterung entsprechend angepasst zu verstehen, z.B. in Bezug auf die Bezeichnung der Datenpunkte (beispielsweise kann dann der "zweite Datenpunkt" als "erster Datenpunkt" bezeichnet werden, etc.).

Die Steuereinrichtung 4 speichert die (vorstehend genannten) ermittelten Datenpunkte als den Datensatz. Vorzugsweise umfasst der Datensatz ausschließlich die für die detektierten Teilhubtest-Ereignisse ermittelten Datenpunkte, also exemplarisch ausschließlich die vorstehend erläuterten Datenpunkte. Optional erfasst die Steuereinrichtung 4 Druckwerte des Arbeitsdrucks und Positionswerte des Ventilglieds 2 kontinuierlich über den gesamten Teilhubtest, aber speichert als den Datensatz lediglich die den detektierten Teilhubtest-Ereignissen zugeordneten Datenpunkte und insbesondere nicht die übrigen Druckwerte und Positionswerte, die keinem dieser detektierten Teilhubtest-Ereignissen zugeordnet sind.

Bevorzugt umfasst der Datensatz weniger als 20 oder weniger als 10 Datenpunkte. Exemplarisch umfasst der Datensatz genau 8 Datenpunkte. Beispielsweise ist der Datensatz weniger als 1 Kilobyte oder weniger als 100 Byte groß.

Der Datensatz wird zweckmäßigerweise von der Steuereinrichtung 4 über eine Kommunikationsverbindung, beispielsweise die Kommunikationsleitung 6 oder das Weitverkehrsnetz 7, an eine externe Rechnereinrichtung, beispielsweise die übergeordnete Steuerung 30 oder den Cloud-Server 40, übertragen. Exemplarisch erfolgt die Übertragung des Datensatzes mittels HART.

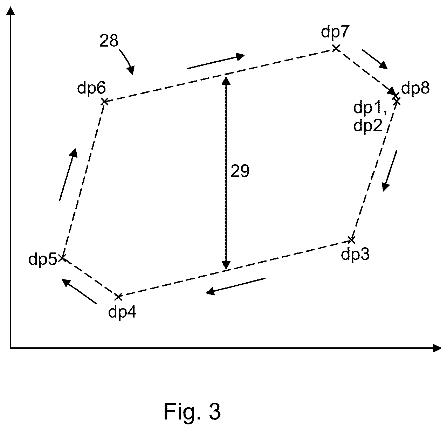

Im Folgenden soll unter Bezugnahme auf die Figur 3 näher darauf eingegangen werden, wie auf Basis des Datensatzes eine Diagnose der Prozessventil-Baueinheit 20 erfolgen kann. Die Diagnose wird insbesondere von der Diagnoseeinrichtung 23 durchgeführt.

Die Figur 3 zeigt eine Druck-Positions-Kurve 28, die aus den Datenpunkten dp1, dp2, dp3, dp4, dp5, dp6, dp7 und dp8 (eines mittels des Teilhubtests ermittelten Datensatzes) gebildet wird. Auf der horizontalen Achse ist die Position des Ventilglieds 2 aufgetragen und auf der vertikalen Achse der Arbeitsdruck. Die eingezeichneten Pfeile zeigen an, in welcher zeitlichen Reihenfolge die Datenpunkte erfasst wurden. Exemplarisch sind (zeitlich) aufeinanderfolgende Datenpunkte durch eine jeweilige Verbindungslinie, insbesondere eine jeweilige Verbindungsgerade, miteinander verbunden. Die ersten beiden Datenpunkte dp1, dp2 weisen hier exemplarisch den gleichen Druckwert und Positionswert auf und befinden sich daher an der gleichen Stelle.

Bevorzugt wird die Druck-Positions-Kurve 28 mittels der Diagnoseeinrichtung 23 auf Basis des Datensatzes erzeugt. Die Druck-Positions-Kurve 28 kann vorzugsweise auf einer Anzeigevorrichtung, beispielsweise einem grafischen Display, dargestellt werden. Bevorzugt weist die Druck-Positions-Kurve die Form einer Schleife, insbesondere einer geschlossenen Schleife oder fast geschlossenen Schleife, auf. Mit der Formulierung "fast geschlossene Schleife" ist beispielsweise eine schleifenförmige Kurve gemeint, bei der der letzte Datenpunkt (hier der achte Datenpunkt dp8) und der erste Datenpunkt dp1 nicht mit einer Verbindungslinie verbunden sind, wie exemplarisch in der Figur 3 gezeigt.

Bevorzugt erfolgt (mittels der Steuereinrichtung 4) wenigstens eine erste Durchführung des Teilhubtests, um als Datensatz einen Referenz-Datensatz zu erhalten. Die erste Durchführung erfolgt beispielsweise bei einer Inbetriebnahme der Prozessventil-Baueinheit 20. Bevorzugt erfolgen danach (mittels der Steuereinrichtung 4) weitere Durchführungen des Teilhubtests, um mit jeder weiteren Durchführung einen jeweiligen Zustands-Datensatz zu erhalten. Die weiteren Teilhubtests erfolgen bevorzugt im laufenden Betrieb der Prozessventil-Baueinheit 20, beispielsweise periodisch. Der Referenz-Datensatz und die Zustands-Datensätze sind vorzugsweise wie der vorstehend erläuterte Datensatz ausgeführt und enthalten beispielsweise jeweils ausschließlich die vorgenannten ermittelten Datenpunkte.

Die Diagnoseeinrichtung 23 führt vorzugsweise einen Vergleich des Referenz-Datensatzes und eines der Zustands-Datensätze durch, um einen Zustand der Prozessventil-Baueinheit zu ermitteln und eine den Zustand anzeigende Diagnoseinformation bereitzustellen. Optional führt die Diagnoseeinrichtung 23 einen Vergleich von aus dem Referenz-Datensatz und dem Zustands-Datensatz abgeleiteten Kenngrößen durch, um einen Zustand der Prozessventil-Baueinheit zu ermitteln und eine den Zustand anzeigende Diagnoseinformation bereitzustellen. Beispiele für abgeleitete Kenngrößen sind die nachstehend erläuterte Reibungs-Information, Druckluftleckage-Information und/oder Federelementbruch-Information.

Bevorzugt ermittelt die Diagnoseeinrichtung 23 auf Basis des Datensatzes die Reibungs-Information, und zwar insbesondere auf Basis einer Ausdehnung 29 der auf Basis des Datensatzes erzeugten Druck-Positions-Kurve 28 in einer Arbeitsdruck-Dimension. Mit dem Begriff "Arbeitsdruck-Dimension" ist die Richtung entlang der Arbeitsdruck-Achse, also im gezeigten Beispiel die vertikale Richtung, gemeint. Die Arbeitsdruck-Dimension kann auch als Arbeitsdruck-Richtung bezeichnet werden. Die Ausdehnung 29 in der Arbeitsdruck-Dimension ist beispielsweise der Abstand zwischen der Verbindungslinie zwischen dem sechsten Datenpunkt dp6 und dem siebten Datenpunkt dp7 und der Verbindungslinie zwischen dem dritten Datenpunkt dp3 und dem vierten Datenpunkt dp4, insbesondere zwischen zwei mittigen Punkten auf diesen Verbindungslinien. Beispielsweise berechnet die Diagnoseeinrichtung 23 die Ausdehnung 29 als Differenz zwischen dem Mittelwert der Druckwerte des sechsten Datenpunkts dp6 und siebten Datenpunkts dp7 und dem Mittelwert der Druckwerte des dritten Datenpunkts dp3 und vierten Datenpunkts dp4.

Die Diagnoseeinrichtung 23 stellt insbesondere in Ansprechen darauf, dass die Ausdehnung 29 zunimmt (beispielsweise im Vergleich zu einer zuvor ermittelten Referenz-Ausdehnung) und/oder dass die Ausdehnung 29 einen Schwellenwert übersteigt, fest, dass eine erhöhte Reibung vorliegt und gibt vorzugsweise eine entsprechende Diagnoseinformation aus, die die erhöhte Reibung anzeigt. Bei einer erhöhten Reibung (beispielsweise Haftreibung und/oder Gleitreibung) muss der Arbeitsdruck bei der Entlüftung (also der ersten pneumatischen Betätigung) weiter abgesenkt werden, um die Bewegung des Ventilglieds 2 einzuleiten, wodurch der dritte Datenpunkt dp3 in Arbeitsdruck-Dimension nach unten verschoben wird. Ferner muss bei der erhöhten Reibung der Arbeitsdruck bei der Belüftung (also der zweiten pneumatischen Betätigung) weiter erhöht werden, um die Bewegung des Ventilglieds 2 einzuleiten, wodurch der sechste Datenpunkt dp6 in Arbeitsdruck-Dimension nach oben verschoben wird. Werden beispielsweise gleichermaßen Haftreibung und Gleitreibung erhöht, so setzt sich der Effekt auch bei den Datenpunkten dp4 (verringerter Arbeitsdruck) und dp7 (erhöhter Arbeitsdruck) fort. Die Reibung wirkt insbesondere auf die Stellanordnung, also das Ventilglied 2, das Antriebselement 13 und/oder die Kolbenanordnung 15.

Bevorzugt ermittelt die Diagnoseeinrichtung 23 auf Basis des Datensatzes die Druckluftleckage-Information, und zwar insbesondere auf Basis eines Druckwerts des Arbeitsdrucks bei dem Teilhubtest-Ereignis, bei dem die erste pneumatische Betätigung des Ventilantriebs 3 erfolgt und/oder auf Basis eines Druckwerts des Arbeitsdrucks bei dem Teilhubtest-Ereignis, bei dem die zweite pneumatische Betätigung des Ventilantriebs 3 erfolgt. Die Ermittlung der Druckluftleckage-Information erfolgt exemplarisch basierend darauf, dass sich der zweite Datenpunkt dp2 und der fünfte Datenpunkt dp5 nach unten (in Arbeitsdruck-Richtung) verlagern. Die Diagnoseeinrichtung 23 stellt insbesondere in Ansprechen darauf, dass der Druckwert des zweiten Datenpunkts dp2 und/oder der Druckwert des fünften Datenpunkts dp5 (beispielsweise im Vergleich zu den Druckwerten eines zuvor ermittelten Datensatzes) absinken und/oder einen Schwellenwert unterschreiten, fest, dass eine erhöhte Druckluftleckage vorliegt (beispielsweise aus der ersten Druckkammer 16) und gibt vorzugsweise eine entsprechende Diagnoseinformation aus, die die erhöhte Druckluftleckage anzeigt.

Aufgrund einer solchen Druckluftleckage sinkt der Arbeitsdruck während der ersten Wartezeit ab, insbesondere ohne (ausgeprägte) Änderung des Positionswerts (des zweiten Datenpunkts dp2). Während der zweiten Wartezeit an der Zielposition (zwischen dem Datenpunkt dp4 und dem Datenpunkt dp5) führt die Druckluftleckage dazu, dass der Arbeitsdruck bei der Fortsetzung der Bewegung des Ventilglieds 2 weniger stark ansteigt, außerdem erfolgt die Weiterbewegung über eine längere Strecke, der Datenpunkt dp5 verschiebt sich exemplarisch nach links unten, insbesondere im Vergleich zu einem entsprechenden Datenpunkt dp5 aus dem Referenz-Datensatz.

Bevorzugt ermittelt die Diagnoseeinrichtung 23 auf Basis des Datensatzes die Federelementbruch-Information, und zwar insbesondere auf Basis einer Steigung einer (insbesondere geraden) Verbindungslinie und/oder einer Position einer Verbindungslinie in einer Arbeitsdruck-Dimension (also exemplarisch in vertikaler Richtung), wobei die Verbindungslinie in der auf Basis des Datensatzes erzeugten Druck-Positions-Kurve 28 von einem Positionsveränderungs-Datenpunkt zu einem Zielpositions-Datenpunkt verläuft. Die Federelementbruch-Information betrifft einen Bruch des Federelements 17. Der Positionsveränderungs-Datenpunkt ist derjenige Datenpunkt, der dem Teilhubtest-Ereignis zugeordnet ist, dass die Positionsänderung des Ventilglieds 2 um den Mindestbetrag erfolgt. Der Zielpositions-Datenpunkt ist derjenige Datenpunkt, der dem Teilhubtest-Ereignis zugeordnet ist, dass das Ventilglied 2 die Position nah genug an der Zielposition erreicht, so dass die pneumatische Betätigung beendet wird. Beispielsweise wird die Federelementbruch-Information auf Basis der Steigung und/oder der Position (in Bezug auf den Arbeitsdruck) der Verbindunglinie zwischen dem dritten Datenpunkt dp3 und dem vierten Datenpunkt dp4 und/oder auf Basis der Steigung und/oder der Position (in Bezug auf den Arbeitsdruck) der Verbindunglinie zwischen dem sechsten Datenpunkt dp6 und dem siebten Datenpunkt dp7 ermittelt.

Die Diagnoseeinrichtung 23 stellt insbesondere in Ansprechen darauf, dass eine oder beide dieser Steigungen und/oder Positionen der Verbindungslinien von den entsprechenden Steigungen und/oder Positionen eines zuvor ermittelten Datensatzes um mehr als eine vorbestimmte Toleranz abweichen, fest, dass ein Bruch des Federelements 17 vorliegt und gibt vorzugsweise eine entsprechende Diagnoseinformation aus, die den Bruch des Federelements 17 anzeigt.

Die Verbindungslinien zwischen den Datenpunkten dp3 und dp4 sowie zwischen den Datenpunkten dp6 und dp7 drehen sich beispielsweise in Uhrzeigersinn und sinken nach unten ab, wenn ein Bruch des Federelements 17 vorliegt. Bei einer Verringerung der Federkonstanten nimmt die Steigung dieser Verbindungslinien ab, da sich die Änderungsrate des Arbeitsdrucks in Abhängigkeit von der Position des Ventilglieds verringert. Die Verbindungslinien zwischen den Datenpunkten dp3 und dp4 sowie zwischen den Datenpunkten dp6 und dp7 werden flacher, zudem kann das gesamte Arbeitsdruck-Niveau der Druck-Positions-Kurve 28 absinken.

Bevorzugt ist die Diagnoseeinrichtung 23 ausgebildet, eine automatisierte Auswertung des Datensatzes, beispielsweise eines oder mehrerer Zustands-Datensätze, insbesondere im Vergleich zum Referenz-Datensatz, durchzuführen, vorzugsweise im Hinblick auf Systemfehler und/oder Verschleiß, beispielsweise mit einer Ermittlung von einer oder mehreren fehlerspezifischen Kenngrößen, insbesondere für erhöhte Haft- und Gleitreibung, Druckluftleckage und/oder Federbruch, wie exemplarisch vorstehend erläutert.

Optional ist die Diagnoseeinrichtung 23 ausgebildet, eine Trendbetrachtung von Kenngrößen aus mehreren in zeitlichen Abständen erfolgten Teilhubtests durchzuführen, wobei für jeden Teilhubtest ein jeweiliger Datensatz erzeugt wird und die Kenngrößen aus den Datensätzen berechnet werden, beispielsweise wie vorstehend erläutert.

Bevorzugt ist die Diagnoseeinrichtung 23 ausgebildet, auf Basis eines oder mehrerer Datensätze eine Dauer zu schätzen, bis ein nicht mehr zu tolerierender Zustand erreicht sein wird, und vorzugsweise eine Meldung auszugeben, wenn die geschätzte Dauer bis zu dem nicht mehr zu tolerierenden Zustand zu gering ist, also beispielsweise einen Schwellenwert unterschritten hat.

## Patentansprüche

1. Verfahren zum Betrieb einer Prozessventil-Baueinheit (20), die eine Prozessarmatur (1), einen pneumatischen Ventilantrieb (3) zum Antrieb der Prozessarmatur (1) und eine Steuereinrichtung (4) zur pneumatischen Betätigung des Ventilantriebs (3) aufweist, umfassend die folgenden durch die Steuereinrichtung (4) durchgeführten Schritte:
- pneumatisches Betätigen des Ventilantriebs (3) mit einem Arbeitsdruck, um mit einem Ventilglied (2) der Prozessarmatur (1) einen Teilhubtest durchzuführen,
- Erfassen von Druckwerten (dw1, dw2, ..., dw8) des Arbeitsdrucks und Positionswerten (pw1, pw2, ..., pw8) des Ventilglieds (2) während des Teilhubtests,
- Detektieren von mehreren aufeinanderfolgenden Teilhubtest-Ereignissen, die während des Teilhubtests auftreten,
- für jedes detektierte Teilhubtest-Ereignis, Ermitteln eines jeweiligen Datenpunkts (dp1, dp2, ..., dp8), der wenigstens einen Druckwert (dw1, dw2, ..., dw8) des Arbeitsdrucks und einen Positionswert (pw1, pw2, ..., pw8) des Ventilglieds (2) umfasst, und
- Speichern der ermittelten Datenpunkte (dp1, dp2, ..., dp8) als Datensatz.

2. Verfahren nach Anspruch 1, wobei der Datensatz ausschließlich die für die detektierten Teilhubtest-Ereignisse ermittelten Datenpunkte (dp1, dp2, ..., dp8) umfasst.

3. Verfahren nach einem voranstehenden Anspruch, wobei der Datensatz weniger als 20 oder weniger als 10 Datenpunkte umfasst.

4. Verfahren nach einem voranstehenden Anspruch, wobei der Datensatz weniger als 1 Kilobyte oder weniger als 100 Byte groß ist.

5. Verfahren nach einem voranstehenden Anspruch, wobei die Teilhubtest-Ereignisse erste Teilbhubtest-Ereignisse umfassen, die einen Beginn des Teilhubtests, einen Beginn einer ersten pneumatischen Betätigung des Ventilantriebs (3), eine erste Positionsänderung des Ventilglieds (2) um einen Mindestbetrag, und ein Erreichen, mit dem Ventilglied (2), einer ersten Position nah genug an einer Zielposition, so dass die erste pneumatische Betätigung beendet wird, umfassen.

6. Verfahren nach Anspruch 5, wobei die ersten Teilhubtest-Ereignisse einer ersten Teilhubtest-Phase zugeordnet sind, in der das Ventilglied (2) ausgehend von einer Ausgangsposition in eine erste Bewegungsrichtung hin zu der Zielposition bewegt wird, und die Teilbhubtest-Ergebnisse ferner zweite Teilbhubtest-Ereignisse umfassen, die einer zweiten Teilhubtest-Phase zugeordnet sind, in der das Ventilglied (2) ausgehend von der Zielposition in eine zweite Bewegungsrichtung hin zu der Ausgangsposition bewegt wird, wobei die zweiten Teilhubtest-Ereignisse einen Beginn einer zweiten pneumatischen Betätigung des Ventilantriebs (3), eine zweite Positionsänderung des Ventilglieds (2) um einen Mindestbetrag, ein Erreichen, mit dem Ventilglied (2), einer zweiten Position nah genug an der Ausgangsposition, so dass die zweite pneumatische Betätigung beendet wird, und ein Ende einer Wartezeit umfassen.

7. Verfahren nach einem voranstehenden Anspruch, wobei mittels einer Diagnoseeinrichtung (23) eine Druck-Positions-Kurve (28) auf Basis des Datensatzes erzeugt wird, wobei die Druck-Positions-Kurve (28) die Form einer Schleife, insbesondere einer geschlossenen Schleife oder fast geschlossenen Schleife, aufweist.

8. Verfahren nach einem voranstehenden Anspruch, wobei der Datensatz von der Steuereinrichtung (4) über eine Kommunikationsverbindung an eine externe Rechnereinrichtung übertragen wird.

9. Verfahren nach einem voranstehenden Anspruch, wobei wenigstens eine erste Durchführung des Teilhubtests erfolgt, um als Datensatz einen Referenz-Datensatz zu erhalten, und danach weitere Durchführungen des Teilhubtests erfolgen, um mit jeder weiteren Durchführung einen jeweiligen Zustands-Datensatz zu erhalten, und wobei eine Diagnoseeinrichtung (23) einen Vergleich des Referenz-Datensatzes und eines Zustands-Datensatzes und/oder einen Vergleich von aus dem Referenz-Datensatz und dem Zustands-Datensatz abgeleiteten Kenngrößen durchführt, um einen Zustand der Prozessventil-Baueinheit (20) zu ermitteln und eine den Zustand anzeigende Diagnoseinformation bereitzustellen.

10. Verfahren nach einem voranstehenden Anspruch, wobei eine/die Diagnoseeinrichtung (23) auf Basis des Datensatzes eine Reibungs-Information ermittelt, und zwar auf Basis einer Ausdehnung (29) einer auf Basis des Datensatzes erzeugten Druck-Positions-Kurve (28) in einer Arbeitsdruck-Dimension.

11. Verfahren nach einem voranstehenden Anspruch, wobei eine/die Diagnoseeinrichtung (23) auf Basis des Datensatzes eine Druckluftleckage-Information ermittelt, und zwar auf Basis eines Druckwerts des Arbeitsdrucks bei einem Teilhubtest-Ereignis, bei dem eine erste pneumatische Betätigung des Ventilantriebs (3) erfolgt und/oder auf Basis eines Druckwerts des Arbeitsdrucks bei einem Teilhubtest-Ereignis, bei dem eine zweite pneumatische Betätigung des Ventilantriebs (3) erfolgt.

12. Verfahren nach einem voranstehenden Anspruch, wobei eine/die Diagnoseeinrichtung (23) auf Basis des Datensatzes eine Federelementbruch-Information ermittelt, und zwar auf Basis einer Steigung einer Verbindungslinie und/oder einer Position einer Verbindungslinie in einer Arbeitsdruck-Dimension, wobei die Verbindungslinie in einer auf Basis des Datensatzes erzeugten Druck-Positions-Kurve (28) von einem Positionsveränderungs-Datenpunkt zu einem Zielpositions-Datenpunkt verläuft, wobei der Positionsveränderungs-Datenpunkt derjenige Datenpunkt ist, der dem Teilhubtest-Ereignis zugeordnet ist, dass eine Positionsänderung des Ventilglieds (2) um einen Mindestbetrag erfolgt, und der Zielpositions-Datenpunkt derjenige Datenpunkt ist, der dem Teilhubtest-Ereignis zugeordnet ist, dass das Ventilglied (2) eine Position nah genug an einer Zielposition erreicht, so dass eine pneumatische Betätigung beendet wird.

13. Prozessventil-Baueinheit (20), die eine Prozessarmatur (1), einen pneumatischen Ventilantrieb (3) zum Antrieb der Prozessarmatur (1) und eine Steuereinrichtung (4) zur pneumatischen Betätigung des Ventilantriebs (3) aufweist, wobei die Prozessventil-Baueinheit (20) ausgebildet ist, ein Verfahren gemäß einem der voranstehenden Ansprüche durchzuführen.
